# EUROPEAN PATENT APPLICATION

(11) **EP 4 815 103 A1**
(43) Date of publication of application: **30.09.2026**
(21) Application number: 26164548.5
(22) Date of filing: 13.03.2026
(51) Int. Cl.: H01M 10/48, H01M 50/271, H01M 50/30, H01M 50/325, H01M 50/35

(54) **VEHICLE REAR PORTION STRUCTURE**

(30) Priority: 26.03.2025 JP 2025052180
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP)
(74) Representative: TBK

(57) **Abstract**

A vehicle rear portion structure, includes: an energy storage device having a plurality of battery cells; a smoke exhaust flow channel, a part of the smoke exhaust flow channel being provided at a lower portion of an interior of the energy storage device; a smoke exhaust valve that is provided at a downstream end portion of the smoke exhaust flow channel and that exhausts smoke to an exterior; a smoke exhaust flow channel cover that covers an upper side, in a vehicle up-down direction, of the smoke exhaust valve and that forms a portion of the smoke exhaust flow channel on a smoke exhaust valve side; and a temperature detection unit that is provided at the smoke exhaust flow channel cover and that detects a temperature inside the smoke exhaust flow channel.

## Description

### BACKGROUND

### Technical Field

This disclosure relates to a vehicle rear portion structure.

### Related Art

Japanese Patent No. 7,259,673 discloses a battery pack comprising a battery module including a plurality of battery cells and a smoke exhaust flow channel that is provided on the underside of the battery cells and through which flows gas exhausted from the battery cells.

### SUMMARY

In Japanese Patent No. 7,259,673, high-pressure connecting parts such as busbars are sometimes provided on the upper side of a smoke exhaust valve, and in order to prevent hot smoke from coming into contact with the high-pressure connecting parts, it is conceivable to dispose a smoke exhaust flow channel cover at the upper side of the smoke exhaust valve.

When a smoke exhaust flow channel cover is disposed at the upper side of the smoke exhaust valve, the hot smoke flows into the smoke exhaust flow channel cover, so it is necessary to detect abnormalities such as a sudden increase in temperature. On the other hand, it is difficult to ensure space for disposing parts at the upper side of the smoke exhaust valve where the high-pressure connecting parts are disposed, and therefore improved design flexibility is desired.

This disclosure has been made in view of the above circumstances and obtains a vehicle rear portion structure that can detect an increase in temperature in a smoke exhaust flow channel and can improve design flexibility.

A vehicle rear portion structure of a first aspect of the disclosure includes: an energy storage device having plural battery cells; a smoke exhaust flow channel, a part of the smoke exhaust flow channel being provided at a lower portion of an interior of the energy storage device; a smoke exhaust valve that is provided at an end portion on a downstream of the smoke exhaust flow channel and that exhausts smoke to an exterior; a smoke exhaust flow channel cover that covers an upper side, in the vehicle up and down direction, of the smoke exhaust valve and the smoke exhaust flow channel cover forms a portion of the smoke exhaust flow channel on a smoke exhaust valve side; and a temperature detection unit that is provided at the smoke exhaust flow channel cover and that detects the temperature in the smoke exhaust flow channel.

In the vehicle rear portion structure of the first aspect, the temperature detection unit is provided at the smoke exhaust flow channel cover, so the temperature in the smoke exhaust flow channel can be detected by the temperature detection unit. An increase in temperature in the smoke exhaust flow channel can be detected. Furthermore, since the temperature detection unit is provided at the smoke exhaust flow channel cover, the installation position of the temperature detection unit is easy to move, and design flexibility can be improved.

A vehicle rear portion structure of a second aspect of the disclosure is the configuration of the vehicle rear portion structure of the first aspect, in which the temperature detection unit is provided at an inner upper surface of the smoke exhaust flow channel cover, on an upstream side of the smoke exhaust valve at the smoke exhaust flow channel that is formed by the smoke exhaust flow channel cover.

In the vehicle rear portion structure of the second aspect, the temperature detection unit is provided at an inner upper surface of the smoke exhaust flow channel cover and the temperature detection unit is provided on an upstream side on the smoke exhaust valve at the smoke exhaust flow channel that is formed by the smoke exhaust flow channel cover, so the temperature of smoke soon after flowing into the smoke exhaust flow channel cover can be detected. A notification can be given before smoke with an abnormal temperature flows into the smoke exhaust valve.

A vehicle rear portion structure of a third aspect of the disclosure is the configuration of the first aspect or the second aspect, in which the temperature detection unit is provided at a position at which the temperature detection unit does not overlap with the smoke exhaust valve as viewed in a top view of the vehicle rear portion structure.

Smoke is flowed into the smoke exhaust valve, so smoke is less likely to accumulate above the smoke exhaust valve. In the vehicle rear portion structure of the third aspect, the temperature detection unit is provided at a position at which the temperature detection unit does not overlap with the smoke exhaust valve as viewed in a top view, so compared with a case in which the temperature detection unit is disposed above the smoke exhaust valve, the temperature of the smoke can be accurately detected.

A vehicle rear portion structure of a fourth aspect of the disclosure is the configuration of any of the first aspect to the third aspect, in which the temperature detection unit is configured by a smoke exhaust thermistor.

In the vehicle rear portion structure of the fourth aspect, the temperature detection unit is configured by a smoke exhaust thermistor, so costs can be reduced and installation space can be downsized.

The vehicle rear portion structure pertaining to the disclosure can detect an increase in temperature in a smoke exhaust flow channel and can improve design flexibility.

### BRIEF DESCRIPTION OF THE DRAWINGS

FIG. 1 is a schematic plan view showing a vehicle rear portion structure pertaining to an embodiment;
FIG. 2 is a schematic perspective view showing a storage battery pack and a smoke exhaust structure provided in the vehicle rear portion structure pertaining to the embodiment;
FIG. 3 is a schematic cross-sectional view of the vehicle rear portion structure of FIG. 1 as cut along a vehicle front-rear direction;
FIG. 4 is a schematic cross-sectional view of the vehicle rear portion structure of FIG. 1 as cut along a vehicle width direction;
FIG. 5 is a schematic cross-sectional view of the vehicle rear portion structure pertaining to the embodiment as cut along the vehicle front-rear direction;
FIG. 6 is a partially enlarged cross-sectional view showing part of FIG. 4;
FIG. 7 is an enlarged perspective view showing main parts of the vehicle rear portion structure pertaining to the embodiment;
FIG. 8 is an enlarged perspective view showing part of FIG. 7 in detail; and
FIG. 9 is a schematic cross-sectional view of the vehicle rear portion structure of FIG. 8 as cut along line B-B.

### DETAILED DESCRIPTION

A vehicle rear portion structure of an embodiment of the disclosure will be described below with reference to the drawings. It will be noted that in the following description, a scope necessary to describe the technology of the disclosure will mainly be described, and places where description is omitted will rely on publicly known technologies. Mutually identical or corresponding members in the drawings are denoted by identical or similar reference signs, and redundant description is omitted. Moreover, in cases where the drawings include a plurality of mutually identical or corresponding members, just some of them may be denoted by reference signs in order to facilitate viewing of the drawings. Arrow FR, arrow UP, and arrow LH in the drawings indicate a vehicle forward direction, a vehicle upward direction, and a vehicle leftward direction of a vehicle 10, respectively. When the directions of front/rear, upper/lower, and left/right are used without further specification in the following description, these will be understood to mean front/rear in the vehicle front-rear direction, upper/lower in the vehicle up-down direction, and left/right in the vehicle width direction (left and right direction) when facing the vehicle forward direction.

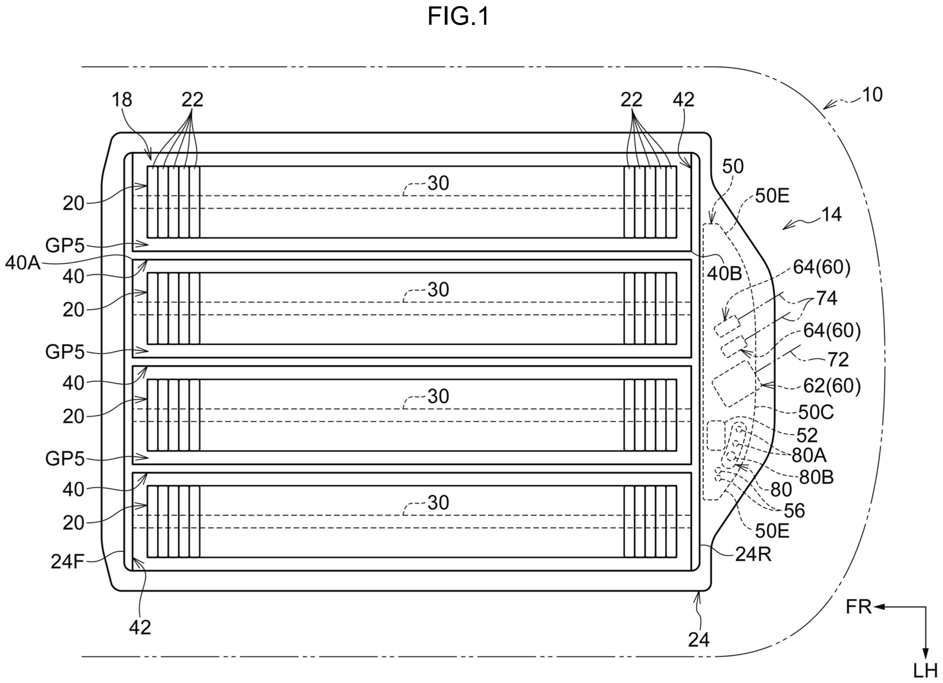

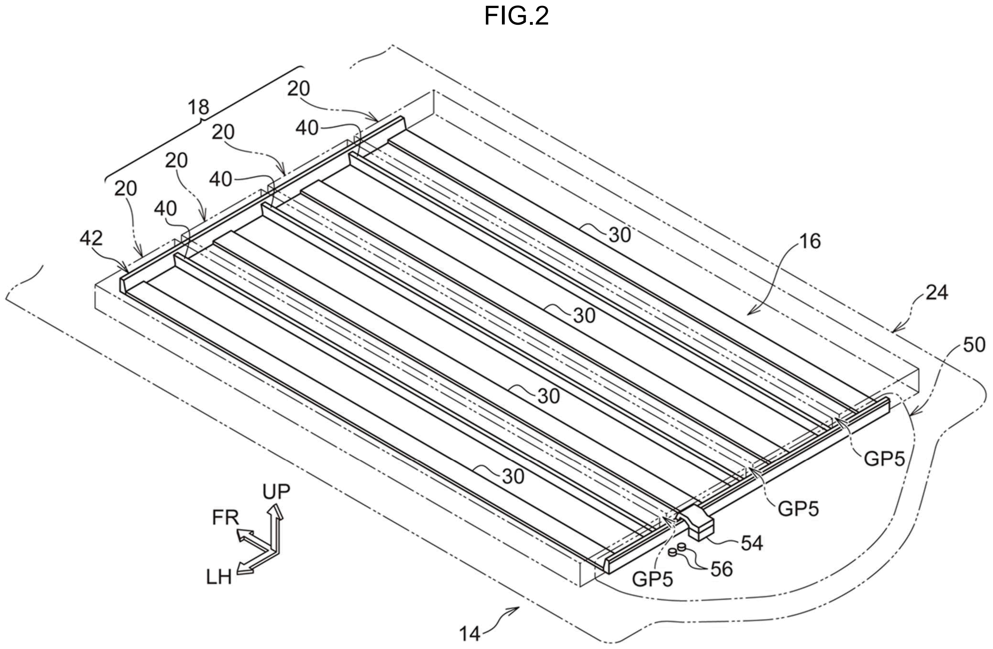

FIG. 1 is a schematic plan view partially showing an example of a vehicle 10 including a vehicle rear portion structure 14 in accordance with the present embodiment, and FIG. 2 is a schematic perspective view showing a storage battery pack 18 serving as an energy storage device installed in the vehicle 10 and a smoke exhaust structure 16. It will be noted that in FIG. 1 and FIG. 2 illustration of an upper cover 26 described below is omitted.

As shown in FIG. 1, the storage battery pack 18 is installed in the vehicle 10. As shown also in FIG. 2, the storage battery pack 18 has plural (in this embodiment, four) storage battery modules 20. The plural storage battery modules 20 are arranged side by side in the width direction. Between the storage battery modules 20, gaps GP5 are configured. In this embodiment, since the number of the storage battery modules 20 is four, the number of the gaps GP5 configured between these storage battery modules 20 is three.

Each of the storage battery modules 20 has plural storage battery cells 22 serving as battery cells. The plural storage battery cells 22 are arranged side by side in the front -rear direction in the storage battery modules 20. That is, the storage battery pack 18 has a configuration where the plural storage battery modules 20, each of which has the plural storage battery cells 22 arranged side by side in the front-rear direction, are arranged side by side in the width direction.

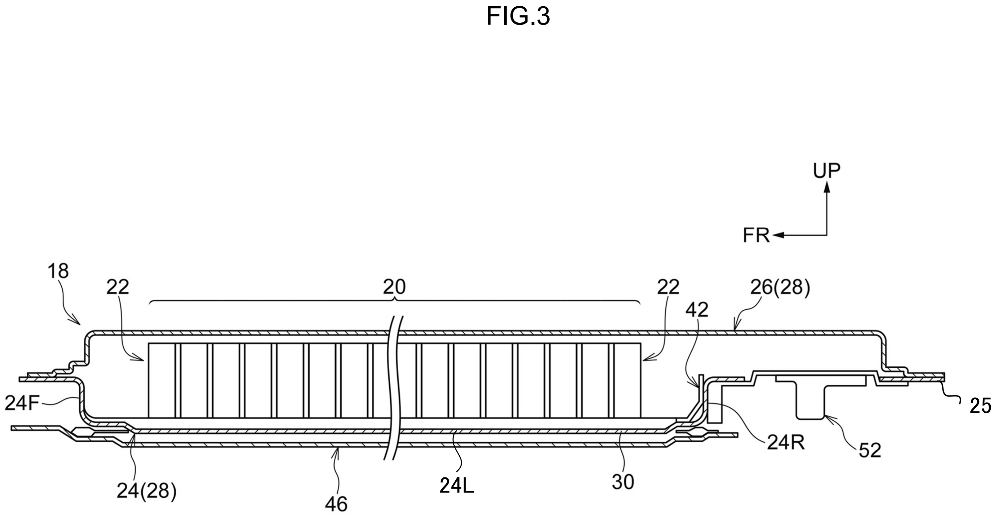

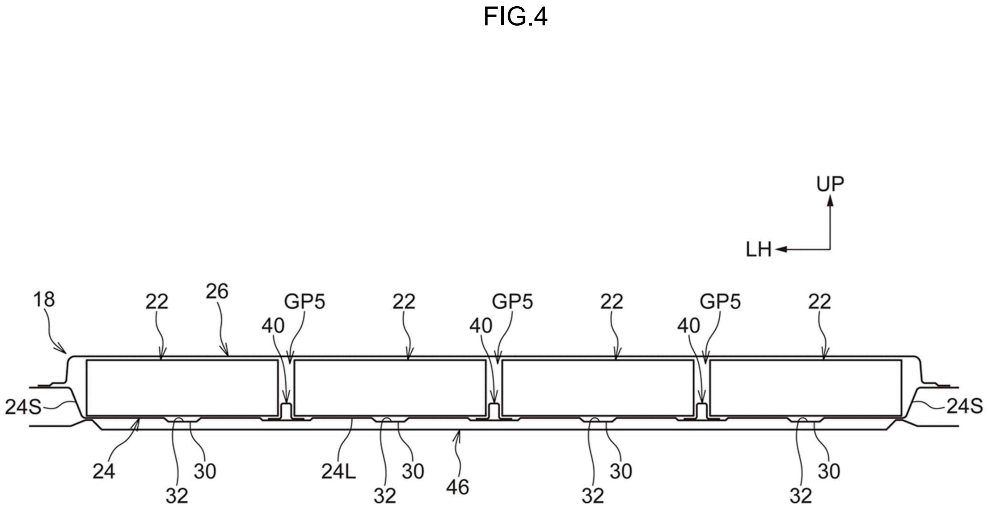

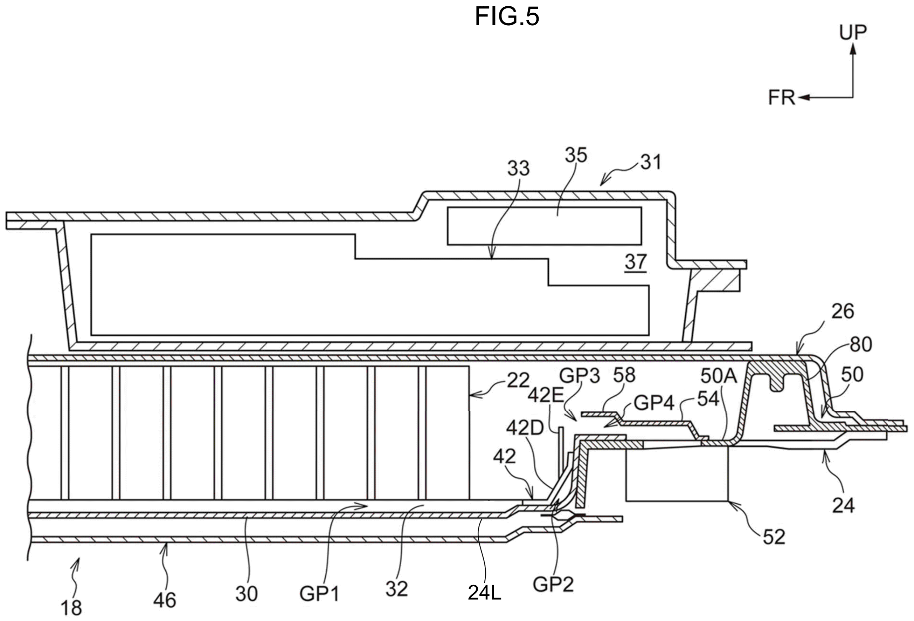

FIG. 3 is a cross-sectional view of the vehicle rear portion structure 14 shown in FIG. 1 as cut in the up-down direction along the front-rear direction, and FIG. 4 is a cross-sectional view of the vehicle rear portion structure 14 shown in FIG. 1 as cut in the up-down direction along the width direction. Furthermore, FIG. 5 is a schematic cross-sectional view of the vehicle rear portion structure as cut along the vehicle front-rear direction.

As shown in FIG. 3 to FIG. 5, the storage battery pack 18 has a lower case 24 and an upper cover 26. The lower case 24 is a box-like member capable of housing the storage battery modules 20 and is configured to include a lower plate 24L, a front plate 24F, a rear plate 24R, and a left and right pair of side plates 24S. The lower plate 24L is a plate-like part that supports the storage battery modules 20 from below. The front plate 24F and the rear plate 24R are plate-like parts that are provided upright from the front side and the rear side of the lower plate 24L, respectively. The side plates 24S are plate-like parts that are provided upright from both width direction sides of the lower plate 24L. Furthermore, the upper surface of the lower case 24 is open, and as shown in FIG. 3, a flange portion 25 juts outward from the peripheral edge of the lower case 24.

The upper cover 26 is a lid-like member that closes off the upper surface of the lower case 24. The periphery of the lower case 24 and the periphery of the upper cover 26 are joined together, and a storage battery case 28 serving as a battery case is configured by the lower case 24 and the upper cover 26. In the space inside this storage battery case 28, the plural storage battery modules 20 are housed side by side in the width direction.

A shared panel 46 is disposed on the underside of the storage battery pack 18. In this embodiment, the shared panel 46 covers the undersurface of the storage battery pack 18 and protects the storage battery modules 20 from foreign objects and such on roads.

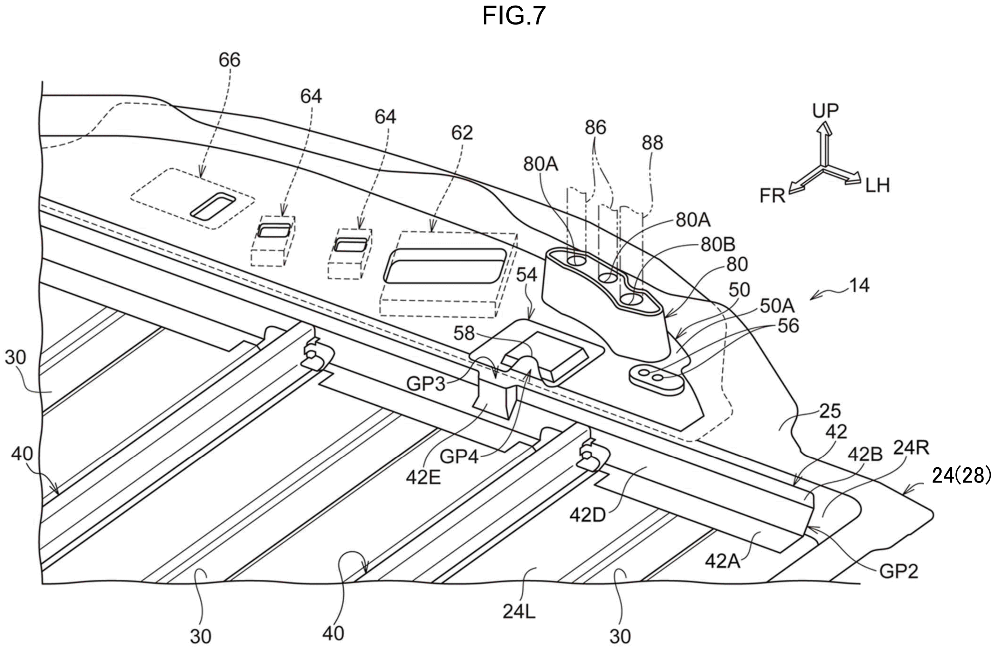

As shown in FIG. 5, a device case 31 is disposed above the rear end portion of the upper cover 26. Inside the device case 31 are disposed a junction box 33 (control device), which houses a relay and auxiliaries, and an ECU (control device) 35. The relay and the auxiliaries are coupled to the storage battery modules 20 by a wiring pipe 88 (see FIG. 7) such as a wiring harness described below and are electrically connected to the storage battery modules 20.

Furthermore, an open portion (not shown in the drawings) is formed in the rear end portion of the upper cover 26. Through this open portion, an inside space 37 of the device case 31 shown in FIG. 5 and the interior of the storage battery pack 18 are communicated with each other.

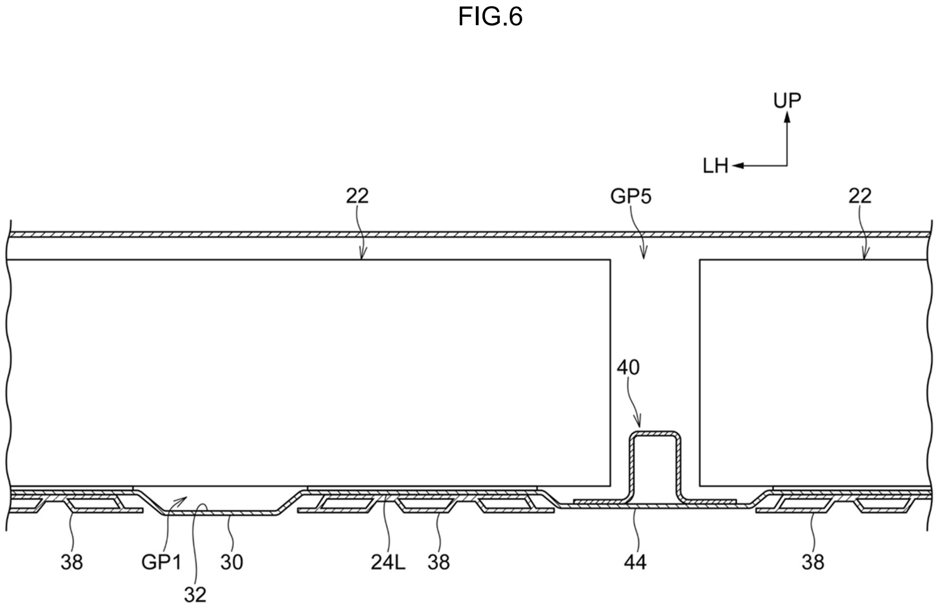

FIG. 6 is a partially enlarged perspective view showing part of FIG. 4, and FIG. 7 is an enlarged perspective view showing main parts of the vehicle rear portion structure 14 pertaining to the embodiment and shows a perspective view of the rear plate 24R side of the lower case 24.

As shown in FIG. 6 and also FIG. 7, the lower plate 24L of the lower case 24 is adhered by an adhesive to the undersurfaces of each of the storage battery cells 22. At the lower plate 24L are formed plural (the same number as the number of the storage battery modules 20) downwardly projecting portions 30. The downwardly projecting portions 30 project downward at a width direction center position of each of the storage battery modules 20. In other words, at the downwardly projecting portions 30, the lower case 24 is partially spaced apart from the undersurfaces of the storage battery cells 22 to configure gaps GP1.

Furthermore, the downwardly projecting portions 30 are formed so as to extend in the front-rear direction-that is, the direction in which the storage battery cells 22 are arranged-in each of the storage battery modules 20. The front-rear direction length of the downwardly projecting portions 30 is about the same as the front-rear direction length of the storage battery modules 20, and the downwardly projecting portions 30 extend continuously in the front-rear direction from the neighborhood of the front plate 24F to the neighborhood of the rear plate 24R.

Because the gaps GP1 at which the lower case 24 is spaced apart from the undersurfaces of the storage battery cells 22 extend in the front-rear direction in this way, the gaps GP1 configure part of a smoke exhaust flow channel 32. When for some reason gas including smoke (hereinafter this gas will simply be called "smoke") is generated in the storage battery cells 22, the smoke is exhausted from positions in the width direction centers of the undersurfaces of the storage battery cells 22. The smoke generated in the storage battery cells 22 flows into the gaps GP1 configured by the downwardly projecting portions 30. The smoke exhaust flow channel 32 is provided continuously from the gaps GP1 to GP4 as described below, and generated smoke is efficiently guided to a smoke exhaust valve 52.

As shown in FIG. 6, at the lower case 24, coolers 38 are provided along the front-rear direction. The coolers 38 are provided at the undersurface of the lower case 24 on both vehicle width direction sides of each of the downwardly projecting portions 30 and configure refrigerant flow channels extending in the front-rear direction. Heat in the coolers 38 is transmitted to refrigerant flowing through the refrigerant flow channels, thereby cooling the storage battery cells 22 and making it possible to inhibit overheating of the storage battery cells 22.

As shown in FIG. 1, FIG. 2, FIG. 4, and FIG. 6, reinforcement members 40 are disposed at each of the gaps GP5 between the storage battery modules 20. As shown in FIG. 6, as viewed in a cross section in the width direction, each of the reinforcement members 40 has a substantially hat-like cross-sectional shape that opens downward.

As shown in FIG. 1, the reinforcement members 40 have lengths reaching the neighborhoods of the front plate 24F and the rear plate 24R of the lower case 24. Front ends 40A and rear ends 40B of the reinforcement members 40 are joined by joining members 42 to the front plate 24F and the rear plate 24R of the lower case 24. The reinforcement members 40 reinforce the storage battery pack 18.

As shown in FIG. 5 and FIG. 7, the joining member 42 disposed on the vehicle rear side has a first separated portion 42D that is spaced apart from the rear plate 24R of the lower case 24. The first separated portion 42D is formed between a joint surface 42A that is in surface-to-surface contact with the lower plate 24L and a joint surface 42B that is in surface-to-surface contact with the rear plate 24R. The first separated portion 42D is formed diagonally as viewed in a cross section in the front-rear direction, and a gap GP2 is formed between the first separated portion 42D and the lower case 24. The gap GP2 is continuous in the width direction and communicates with the gaps GP1 configured by the undersurfaces of the storage battery cells 22 and the downwardly projecting portions 30. That is, the gaps GP2 configure part of the smoke exhaust flow channel 32. Furthermore, the joining members 42 are part of the flow channel member configuring the smoke exhaust flow channel 32.

As shown in FIG. 6, at the lower plate 24L, cell bases 44 are formed in positions corresponding to the reinforcement members 40. The cell bases 44 are parts at which the lower plate 24L of the lower case 24 is formed projecting downward in positions corresponding to the reinforcement members 40. The cell bases 44 are joined to the reinforcement members 40 and close off the open portions on the undersides of the reinforcement members 40.

The front ends 40A and the rear ends 40B of the reinforcement members 40 are open (see FIG. 1) and communicate with the gap GP2 shown in FIG. 5. That is, portions with closed cross-sectional shapes (closed shapes in a cross section in the width direction) configured by the reinforcement members 40 and the cell bases 44 communicate with the smoke exhaust flow channel 32 configured by the gap GP2. The closed cross-sectional shapes configured by the reinforcement members 40 and the cell bases 44 also form part of the smoke exhaust flow channel 32. That is, the reinforcement members 40 and the cell bases 44 are part of the flow channel member.

In this embodiment, parts of the lower case 24 are served as the cell bases 44. That is, the lower case 24 served as the cell bases 44 is a structure extending across the plural reinforcement members 40. In other words, the cell bases 44 are integrally provided by the lower case 24 with respect to the plural reinforcement members 40 and configure part of the smoke exhaust flow channel 32.

Furthermore, as shown in FIG. 1, on the rear side of the lower case 24 is disposed a connector block 50. The front-side edge of the connector block 50 is linear in the width direction. By contrast, the rear-side edge of the connector block 50 is curved so that its width direction center projects in the rearward direction. Consequently, a width direction center portion 50C of the connector block 50 is disposed at more rear side than both vehicle width direction end portions 50E of the connector block 50.

Furthermore, as shown in FIG. 1 and FIG. 5, a smoke exhaust valve 52 is attached to the connector block 50. A cover plate 54, serving as a smoke exhaust flow channel cover, is attached to the connector block 50. The cover plate 54 and the connector block 50 configure the smoke exhaust flow channel 32 from the storage battery pack 18 to the smoke exhaust valve 52. The cover plate 54 is a discrete member from the storage battery case 28.

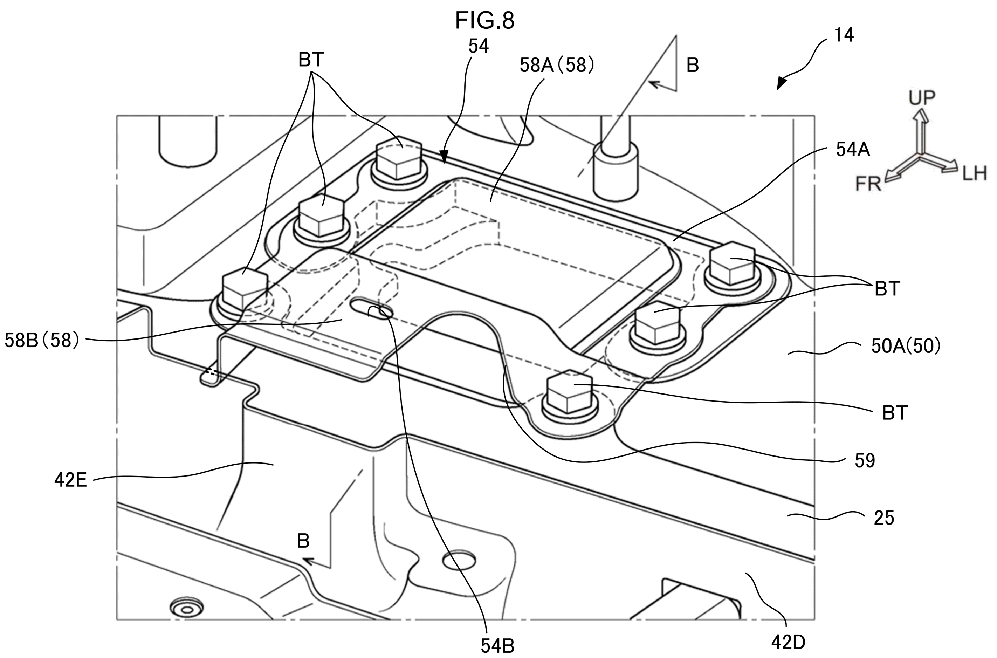

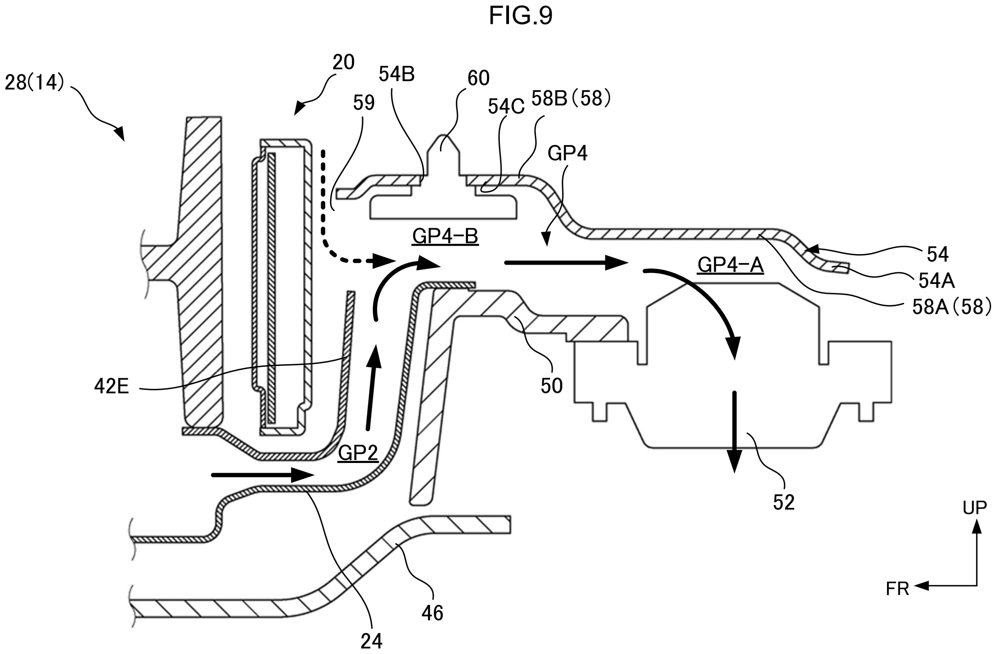

FIG. 8 is an enlarged perspective view showing part of FIG. 7 in detail and shows a perspective view of the vicinity of the cover plate 54. FIG. 9 is a schematic cross-sectional view of the vehicle rear portion structure of FIG. 8 as cut along line B-B.

As shown in FIG. 7 to FIG. 9, an upwardly projecting portion 58 is formed at the cover plate 54. The upwardly projecting portion 58 has a shape at which a width direction center portion of the cover plate 54 is curved so as to project upward at a front-side edge of the cover plate 54. In other words, the cover plate 54 has a recessed shape that opens downward. As shown in FIG. 8 and FIG. 9, the upwardly projecting portion 58 specifically includes, as an example, a rear upwardly projecting portion 58A, which is positioned on the rear side and is formed in a substantially rectangular shape as viewed in a top view, and a front upwardly projecting portion 58B, which extends diagonally forward and upward from the front end of the rear upwardly projecting portion 58A and is formed in a substantially rectangular shape as viewed in a top view.

The rear upwardly projecting portion 58A is formed such that the peripheral edge portions of its rear end and both side ends extend diagonally inward and upward from a flat portion 54A of the cover plate 54. This flat portion 54A is, as shown in FIG. 8, secured by fastening members BT such as bolts to an upper surface 50A of the connector block 50. Furthermore, as shown in FIG. 9, the rear upwardly projecting portion 58A covers the upper side of the smoke exhaust valve 52, and a gap GP4-A is configured between the rear upwardly projecting portion 58A and the smoke exhaust valve 52. That is, the rear upwardly projecting portion 58A of the cover plate 54 covers the upper side of the smoke exhaust valve 52 to thereby form a portion of the smoke exhaust flow channel 32 on the smoke exhaust valve 52 side.

Furthermore, the undersurface of the flat portion 54A on the rear end of the cover plate 54 is in abutting contact with the upper surface 50A of the connector block 50, so the rear end of the gap GP4-A is closed and the smoke exhaust flow channel 32 is also closed. That is, the smoke exhaust valve 52 is provided in the downstream end portion of the smoke exhaust flow channel 32.

The upper surface of the front upwardly projecting portion 58B is positioned more upward than the upper surface of the rear upwardly projecting portion 58A, and the peripheral edge portions of both side ends thereof are secured by fastening members BT such as bolts to the flange portion 25. As mentioned above, the rear end of the front upwardly projecting portion 58B is connected to the front end of the rear upwardly projecting portion 58A. By contrast, the front end of the front upwardly projecting portion 58B opens forward. Furthermore, as shown in FIG. 9, the front end of the front upwardly projecting portion 58B is positioned more forward than the smoke exhaust valve 52, and the front end is disposed so as to extend more forward than the front end of the connector block 50. Furthermore, the front end of the front upwardly projecting portion 58B is, as an example, disposed so as to be positioned more forward than a second separated portion 42E described below.

Furthermore, as shown in FIG. 9, the front upwardly projecting portion 58B covers the upper side of the gap GP2, a gap GP4-B is configured between the lower case 24 and he cover plate 54, and the gap GP2 and the gap GP4-B are communicated with each other. That is, the front upwardly projecting portion 58B of the cover plate 54 covers the upper side of the lower case 24 and the connector block 50 to thereby form a portion of the smoke exhaust flow channel 32 on the storage battery cells 22 side.

Furthermore, as shown in FIG. 8, the cover plate 54 is provided with a window portion 59 in the side surface of the front upwardly projecting portion 58B on the storage battery cells 22 side. The window portion 59 is provided so as to communicate with the open portion in the front end of the front upwardly projecting portion 58B and extends to the upper surface of the front upwardly projecting portion 58B. In other words, the window portion 59 is formed as a result of the upper surface of the front upwardly projecting portion 58B being cut out from the front end to a rear portion side of the center of the upper surface. The window portion 59 is, as an example, provided facing leftward from the width direction center of the front upwardly projecting portion 58B and is formed such that it becomes narrower in width heading rearward. Furthermore, the rear end of the window portion 59 is formed in the shape of an arc.

As shown in FIG. 9, the window portion 59 is communicated with the smoke exhaust flow channel 32 formed by the cover plate 54, that is, the gap GP4-A and the gap GP4-B. It will be noted that the gap GP4-A and the gap GP4-B together form a gap GP4 disposed between the cover plate 54 and the lower case 24. Smoke is movable in the front-rear direction through this gap GP4, and the gap GP4 forms part of the smoke exhaust flow channel 32. That is, the cover plate 54 is part of the flow channel member configuring the smoke exhaust flow channel. Specifically, the cover plate 54 configures part of the upper side of the flow channel member.

Furthermore, in the cover plate 54, a long hole 54B whose lengthwise direction coincides with the width direction is provided at the vehicle front-rear direction center portion of the front upwardly projecting portion 58B and more rightward in the vehicle width direction than the window portion 59. As shown in FIG. 9, a smoke exhaust thermistor 60 serving as a temperature detection unit is attached to the long hole 54B. The smoke exhaust thermistor 60 detects the temperature in the smoke exhaust flow channel 32. The smoke exhaust thermistor 60 is disposed in the smoke exhaust flow channel 32 formed by the cover plate 54 and specifically is disposed at the gap GP4-B. That is, the smoke exhaust thermistor 60 is provided on an inner upper surface 54C on the upstream side of the smoke exhaust flow channel 32 formed by the cover plate 54. Furthermore, the smoke exhaust thermistor 60 is provided at a position that does not overlap with the smoke exhaust valve 52 as viewed in a top view. It will be noted that the temperature detection unit is not limited to the smoke exhaust thermistor 60 and that any device may be used as long as it is a device capable of detecting the temperature in the smoke exhaust flow channel 32. For example, the temperature detection unit may be a thermometer.

As shown in FIG. 7, a second separated portion 42E is provided at the joining member 42 disposed on the vehicle rear side. The second separated portion 42E is formed at a position in the width direction corresponding to the upwardly projecting portion 58 of the cover plate 54. A gap GP3 is formed between the second separated portion 42E and the rear plate 24R of the lower plate 24. Consequently, the smoke exhaust flow channel 32 in the storage battery pack 18 is formed so as to be continuous from the gaps GP1 between the undersurfaces of the storage battery cells 22 and the downwardly projecting portions 30, via the gaps GP2 and GP3 between the joining member 42 and the lower case 24 and the gap GP4 between the cover plate 54 and the lower case 24, to the smoke exhaust valve 52.

The smoke exhaust valve 52 is configured to open when the internal pressure of the smoke exhaust flow channel 32 becomes higher than the air pressure outside the smoke exhaust flow channel 32 by a predetermined value or more. That is, when smoke flows into the smoke exhaust flow channel 32 and the internal pressure becomes higher by a predetermined value or more, the smoke exhaust valve 52 is opened and the gas inside the smoke exhaust flow channel 32 is exhausted to the exterior.

Moreover, respiratory membranes 56 are attached to the connector block 50. The respiratory membranes 56 are configured to transmit gas but stop the transmission of liquid (including steam). For the material, Gore Tex (registered trademark), for example, may be used. Furthermore, the respiratory membranes 56 are formed in such a way that, even when they transmit gas, they cause resistance to act on the movement of gas so that the gas does not move all at once in a short amount of time. In this embodiment, the respiratory membranes 56 are provided in a position located more outward in the width direction than the smoke exhaust valve 52.

As shown in FIG. 7, on the undersurface side of the connector block 50, including the width direction center portion side, are disposed a first connector 62 made of resin, second connectors 64 made of resin, and a third connector 66 made of metal, for example. It will be noted that although the drawings do not show this, wires are connected to each of these connectors. Furthermore, out of these connectors in the vehicle width direction, the first connector 62 is disposed on the smoke exhaust valve 52 side, and the second connectors 64 and the third connector 66 are disposed on the opposite side from the smoke exhaust valve 52 across the first connector 62.

Furthermore, as shown in FIG. 1 and FIG. 7, the smoke exhaust valve 52 and the respiratory membranes 56 are provided on the width direction outer side of the connector block 50, and a routing block 80 is formed on the vehicle rear side of the smoke exhaust valve 52 and the respiratory membranes 56. The routing block 80 is provided upright from the upper surface 50A of the connector block 50 and has the shape of a tube that is flat in the front-rear direction.

Specifically, the routing block 80 has a shape that is longer in the width direction than in the front-rear direction as viewed from the vehicle upper side and is provided on the outer edge side of the connector block 50. Furthermore, the routing block 80 has a substantially truncated conical shape as viewed from the vehicle outer side, and its cross-sectional shape as cut along the horizontal direction becomes larger heading in the vehicle downward direction.

Furthermore, inside the routing block 80 are formed circular first insertion holes 80A and a circular second insertion hole 80B that penetrate the connector block 50 in the up-down direction. In this embodiment, there are two first insertion holes 80A and there is one second insertion hole 80B that is larger in diameter than the first insertion holes 80A. Furthermore, the second insertion hole 80B is provided more outward in the width direction than the first insertion holes 80A. The two first insertion holes 80A are spaced apart from each other in the width direction, and the second insertion hole 80B is also spaced apart from the first insertion holes 80A in the width direction.

Circulation pipes 86 that circulate a coolant in on-board devices of the vehicle, for example, are inserted through the first insertion holes 80A. Furthermore, a wiring pipe 88 that houses multiple wires that deliver electrical signals to the on-board devices is inserted through the second insertion hole 80B. The circulation pipes 86 and the wiring pipe 88 are examples of routing members routed in the vehicle. That is, in this embodiment, a plurality of routing members spaced apart from each other in the width direction are inserted through the routing block 80 along the up-down direction.

Next, the action and effects of this embodiment will be described.

In the vehicle 10 to which the vehicle rear portion structure 14 of this embodiment has been applied, each of the storage battery modules 20 is configured by the plural storage battery cells 22. That is, the plural storage battery cells 22 can integrally configure the storage battery modules 20.

The storage battery cells 22 are arranged side by side in the front-rear direction in each of the storage battery modules 20, and the storage battery modules 20 are arranged side by side in the width direction. The plural storage battery cells 22 can be efficiently arranged in the front-rear direction and in the width direction. In particular, since the direction in which the storage battery cells 22 are arranged in each of the storage battery modules 20 is along the front-rear direction, the number of the storage battery cells 22 per row can be increased compared with a structure where the storage battery cells 22 are arranged in the width direction.

Under normal conditions smoke is not generated in the storage battery cells 22, but when smoke is generated for some reason, the smoke is exhausted from positions in the width direction centers of the undersurfaces of the storage battery cells 22. The smoke flows out into the gaps GP1 provided between the downwardly projecting portions 30 of the lower case 24 of the storage battery pack 18 and the undersurfaces of the storage battery cells 22. Moreover, the smoke flows through the gap GP2 and the gap GP3 provided on the rear plate 24R side of the lower case 24 and the gap GP4 provided between the cover plate 54 and the connector block 50 that are provided at the rear end portion of the lower case 24 to the smoke exhaust valve 52. The gaps GP1 to the gap GP4 configure part of the smoke exhaust flow channel 32, and when the pressure inside the smoke exhaust flow channel 32 becomes higher than the pressure outside, the smoke is exhausted from the smoke exhaust valve 52.

Furthermore, the vehicle rear portion structure 14 of this embodiment has the respiratory membranes 56. The respiratory membranes 56 allow gas to move relative to the smoke exhaust flow channel 32 but stop the movement of liquid. For example, if the vehicle 10 moves to a place (as an example, highlands) where the atmospheric pressure is different, the pressure difference between the internal pressure of the smoke exhaust flow channel 32 and the atmospheric pressure increases. In this case, air passes through the respiratory membranes 56, whereby this pressure difference can be alleviated.

Furthermore, the vehicle rear portion structure 14 of this embodiment is provided with the cover plate 54 that forms a portion of the smoke exhaust flow channel 32 on the smoke exhaust valve 52 side, and the window portion 59 is provided at the side surface of the cover plate 54 on the storage battery cells 22 side. Smoke in the storage battery case 28 that has leaked from the storage battery cells 22 can be exhausted by the window portion 59. That is, as indicated by the dashed arrow as an example in FIG. 9, smoke in the storage battery case 28 that has leaked from the storage battery cells 22 can be flowed through the window portion 59 into the gap GP4 and exhausted from the smoke exhaust valve 52.

Furthermore, the window portion 59 is communicated with the smoke exhaust flow channel 32 formed by the cover plate 54, so smoke to be exhausted from the smoke exhaust flow channel 32 and smoke that has leaked out into the storage battery case 28 can be consolidated and exhausted. That is, as shown in FIG. 9, smoke flowing into the gap GP4 from the gap GP2 and smoke flowing into the gap GP4 from the window portion 59 can be consolidated and exhausted from the smoke exhaust valve 52.

Furthermore, the cover plate 54 has a recessed shape that opens downward in the up-down direction, so space can be provided on the underside of the cover plate 54. Because of this, smoke can be exhausted more efficiently. Furthermore, the cover plate 54 has the rear upwardly projecting portion 58A and the front upwardly projecting portion 58B, so the diameter of the smoke exhaust flow channel 32 is smaller in the gap GP4-A located on the vehicle rear side than in the gap GP4-B located on the vehicle front side. For that reason, the fluid pressure of the smoke can be increased from the gap GP4-B to the gap GP4-A, so the smoke can be efficiently exhausted from the smoke exhaust valve 52.

Furthermore, the cover plate 54 and the storage battery case 28 are configured by separate parts, so by changing the shape of the cover plate 54, the design flexibility of the smoke exhaust flow channel 32 on the upper side of the smoke exhaust valve 52 can be increased.

Furthermore, the smoke exhaust thermistor 60 is provided at the cover plate 54, so the temperature in the smoke exhaust flow channel 32 can be detected by the smoke exhaust thermistor 60. An increase in temperature in the smoke exhaust flow channel 32 can be detected. Furthermore, since the smoke exhaust thermistor 60 is provided at the cover plate 54, the installation position of the smoke exhaust thermistor 60 is easy to move, and design flexibility can be improved.

Furthermore, the smoke exhaust thermistor 60 is provided at the inner upper surface 54C on the upstream side of the smoke exhaust flow channel 32 formed by the cover plate 54, so the temperature of smoke soon after flowing into the cover plate 54 can be detected. A notification can be given before smoke with an abnormal temperature flows into the smoke exhaust valve 52.

Furthermore, smoke is flowed into the smoke exhaust valve 52, so smoke is less likely to accumulate above the smoke exhaust valve 52. In the vehicle rear portion structure 14 of this embodiment, the smoke exhaust thermistor 60 is provided at a position at which it does not overlap with the smoke exhaust valve 52 as viewed in a top view, so compared with a case where the smoke exhaust thermistor 60 is disposed above the smoke exhaust valve 52, the temperature of the smoke can be accurately detected.

Furthermore, the smoke exhaust thermistor is employed as the temperature detection unit, so costs can be reduced and installation space can be downsized.

It will be noted that some of the configurations of the embodiment described above may also be omitted or changed.

An embodiment of the disclosure has been described above, but the disclosure is not limited to what is described above and can naturally be modified and implemented in a variety of ways, in addition to what is described above, without departing from the scope thereof.

## Claims

1. A vehicle rear portion structure (14), comprising:
an energy storage device (18) having a plurality of battery cells (22);
a smoke exhaust flow channel (32), a part of the smoke exhaust flow channel (32) being provided at a lower portion of an interior of the energy storage device (18);
a smoke exhaust valve (52) that is provided at a downstream end portion of the smoke exhaust flow channel (32) and that exhausts smoke to an exterior;
a smoke exhaust flow channel cover (54) that covers an upper side, in a vehicle up-down direction, of the smoke exhaust valve (52) and that forms a portion of the smoke exhaust flow channel (32) on a smoke exhaust valve side; and
a temperature detection unit (60) that is provided at the smoke exhaust flow channel cover (54) and that detects a temperature inside the smoke exhaust flow channel (32).

2. The vehicle rear portion structure (14) of claim 1, wherein the temperature detection unit (60) is provided at an inner upper surface of the smoke exhaust flow channel cover (54), on an upstream side of the smoke exhaust valve (52) at the smoke exhaust flow channel (32 that is formed by the smoke exhaust flow channel cover (54).

3. The vehicle rear portion structure (14) of claim 1, wherein the temperature detection unit (60) is provided at a position at which the temperature detection unit (60) does not overlap with the smoke exhaust valve (52) as viewed in a top view of the vehicle rear portion structure (14).

4. The vehicle rear portion structure (14) of claim 1, wherein the temperature detection unit (60) is configured by a smoke exhaust thermistor.
